# EUROPEAN PATENT APPLICATION

(11) **EP 2 402 601 A2**
(43) Date of publication of application: **04.01.2012**
(21) Application number: 11171591.8
(22) Date of filing: 27.06.2011
(51) Int. Cl.: F03D 7/02

(54) **Apparatus and method for adjusting the yaw of a nacelle of a wind energy system**

(30) Priority: 29.06.2010 US 825415
(71) Applicant: General Electric Company, Schenectady, NY 12345 (US)
(72) Inventor: Scholte-Wassink, Hartmut Andreas, 49828 Lage (DE)
(74) Representative: Bedford, Grant Richard

(57) **Abstract**

The present disclosure relates to a hydraulic pressure system (200) for providing fluid pressure to actuate at least one hydraulic yaw motor (444) for adjusting the yaw of a nacelle (110) of a wind energy system (100) independently of electrical power. The hydraulic pressure system includes a connection portion (210) connectable to a main drive train of the wind energy system, the main drive train transmitting kinetic energy generated by wind energy. The hydraulic pressure system is adapted to be driven by the kinetic energy of the main drive train via the connection portion to provide the fluid pressure. The present disclosure further relates to a hydraulic yaw adjustment system for adjusting the yaw of a nacelle of a wind energy system independently of electrical power, the hydraulic yaw adjustment system including the hydraulic pressure system. The present disclosure further relates to a wind energy system including the hydraulic yaw adjustment system, to a non-electrical control system (220), and to a method of adjusting the yaw of the nacelle of the wind energy system independently of electrical power.

## Description

The subject-matter disclosed herein relates generally to an apparatus and method for adjusting the yaw of a nacelle of a wind energy system. It specifically relates to a hydraulic yaw adjustment system of a nacelle of a wind energy system, typically an emergency hydraulic yaw adjustment system. It relates moreover to a hydraulic pressure system, and to a non-electrical control system.

Wind energy systems, more and more, become an important factor in reaching economical and ecological goals in power production. In a wind energy system, power is produced by a wind turbine that is driven by the wind and transmits its force via a shaft system and gearbox to a power generator.

If the plane defined by the rotor blades of the wind turbine is not perpendicular to the wind the turbine may still be operable, but the rotor blades experience shear forces that lead to a large load on the rotor blades, and, therefore, to expensive maintenance through wear. Typically, the nacelle, to which the rotor is connected, is therefore turned to directly face the wind. In doing so, a controller such as an electronic computer receives measurement data of wind direction and wind speed and controls a motor to adjust the yaw angle of the nacelle.

However, in case of grid failure or in case of internal failure of the electrical or electronic components, the yaw angle of the nacelle may no longer be adjustable.

Consequently, an improved yaw adjustment system, in particular for an improved emergency yaw control system, would be desirable.

In light of the above, according to one aspect of the present invention, a hydraulic pressure system for providing fluid pressure to actuate at least one hydraulic yaw motor for adjusting a yaw of a nacelle of a wind energy system independently of electrical power is provided. Therein, the hydraulic pressure system includes a connection portion connectable to a main drive train of the wind energy system. The main drive train transmits kinetic energy generated by wind energy. The hydraulic pressure system is adapted to be driven by the kinetic energy of the main drive train via the connection portion.

In another aspect, a hydraulic yaw adjustment system for adjusting the yaw of a nacelle of a wind energy system independently of electrical power is provided. The hydraulic yaw adjustment system includes at least one hydraulic yaw motor for adjusting the yaw of the nacelle, and a hydraulic pressure system providing fluid pressure to actuate the at least one hydraulic yaw motor. Therein, the hydraulic pressure system is connectable to a main drive train of the wind energy system and is adapted to be driven by kinetic energy of the main drive train.

According to another aspect, a wind energy system is provided. The wind energy system includes a main drive train for transmitting wind power in the form of kinetic energy, and a hydraulic yaw adjustment system for adjusting the yaw of a nacelle of the wind energy system independently of electrical power. The hydraulic yaw adjustment system includes at least one hydraulic yaw motor for adjusting the yaw of the nacelle, and a hydraulic pressure system providing fluid pressure to actuate the at least one hydraulic yaw motor. Therein, the hydraulic pressure system is connected to the main drive train and is driven by the kinetic energy of the main drive train.

According to yet another aspect, a non-electrical control system for controlling operation of at least one hydraulic yaw motor for adjusting a yaw of a nacelle of a wind energy system independently of electrical power is provided. The non-electrical control system includes a three-position valve for controlling a flux of a hydraulic fluid. The three-position valve includes a first position allowing for a positive flux direction of the flux, a second position allowing for a negative flux direction of the flux, and a stop position for stopping the flux. The non-electrical control system further includes an actuator for actuating the three-position valve. Therein, the actuator is adapted to select one of the first, second and third positions by means of wind force acting on the actuator.

According to another aspect, a method of adjusting a yaw of a nacelle of a wind energy system independently of electrical power is provided. The method includes generating kinetic energy of a main drive train from wind energy, and generating fluid pressure from the kinetic energy of the main drive train in order to actuate at least one hydraulic yaw motor for adjusting the yaw of the nacelle.

The system and method solve the technical problem of making a wind energy system more fail-safe, in particular in case of grid failure or in case of internal failure of the electrical or electronic components. Specifically, the problem of how to allow jaw adjustment of a nacelle even in an emergency case such as power failure is solved.

Embodiments are also directed to methods for manufacturing and operating the disclosed hydraulic pressure systems, hydraulic yaw adjustment systems, wind energy systems, and non-electrical control systems. These method steps may be performed manually or automated, e.g., controlled by a computer programmed by appropriate software, by any combination of the two or in any other manner.

Various aspects, advantages and features of the present invention are apparent from the dependent claims, the description and the accompanying drawings, in which:
Fig. 1 shows a schematic, perspective, open view of wind energy system, in which embodiments described herein may be used;
Figs. 2 and 3 show schematic illustrations of a hydraulic pressure system according to embodiments described herein;
Fig. 4 shows a schematic, perspective view of a hydraulic yaw adjustment system according to embodiments described herein;
Fig. 5 shows a schematic illustration of a non-electrical control system according to embodiments described herein;
Fig. 6 shows a schematic, perspective, open view of a hydraulic pitch adjustment system according to embodiments described herein.

Reference will now be made in detail regarding the various exemplary embodiments, one or more examples of which are illustrated in each figure. Each example is provided by way of explanation and is not meant as a limitation. For instance, features illustrated or described as part of one embodiment can be used on, or in conjunction with, other embodiments to yield yet further embodiments. It is intended that the present disclosure includes such modifications and variations.

Within the following description of the drawings, the same reference numbers refer to the same components. Generally, only the differences with respect to the individual embodiments are described. The structures shown in the drawings are not depicted true to scale but rather serve only for the better understanding of the embodiments.

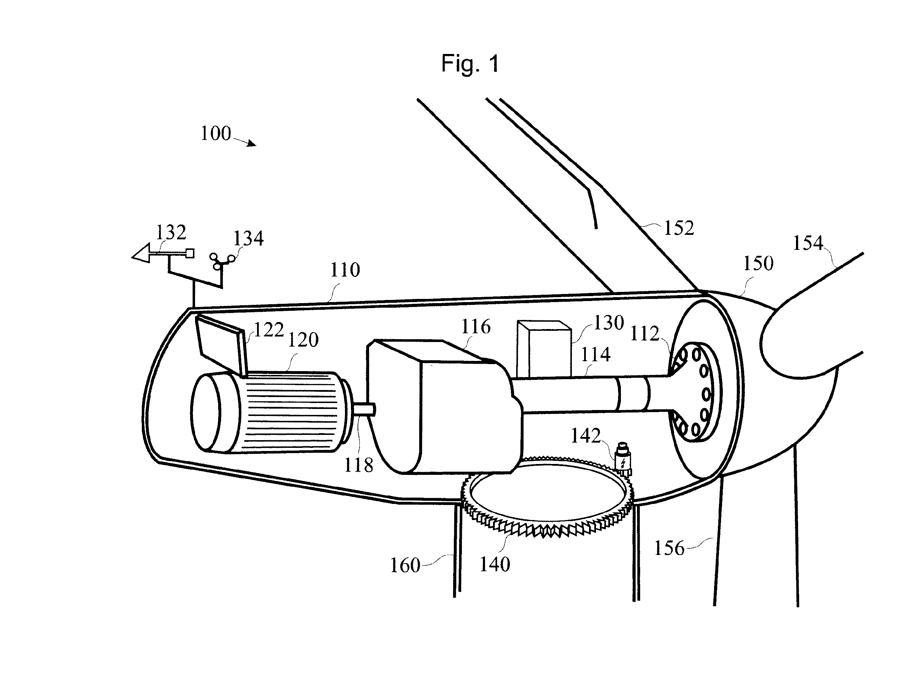

Fig. 1 illustrates a wind energy system in which embodiments described herein may be used. The wind energy system 100 includes a nacelle 110, of which a schematic, perspective, open view is shown. The nacelle 110 houses a main shaft 114, a gearbox 116, a generator shaft 118, and a generator 120 with a cooling system 122 for cooling the generator. The main shaft 114 includes a rotor connection portion 112 for connecting a rotor thereto. A rotor typically includes blades 152, 154, 156 connected to a hub 150. The main shaft 114 can be a low speed shaft, while the generator shaft 118 may be a high speed shaft adapted for driving the generator 120. The increased speed of the high speed shaft may be achieved by transmission of the gearbox 116.

A main drive train of the wind energy system includes the mechanical parts transmitting the forces created by the rotor to the generator. The main drive train possesses kinetic energy, typically in the form of rotational energy.The main drive train includes the main shaft 114, the gearbox 116 and the generator shaft 118 in the embodiment shown in Fig. 1. The main drive train may also include the generator and/or the hub in some embodiments. Moreover, embodiments described herein may be used in other kinds of wind energy systems, e.g., in wind energy systems including direct drive main drive trains, gearless main drive trains, or hybrid main drive trains providing only some level of gearing such as one or two stages.

A wind energy system 100 may include a wind vane 132 for determining the direction of the wind and an anemometer 134 for determining the wind speed as shown in Fig. 1. Information about wind direction and wind speed may be transmitted to an electronic controller 130, e.g., a computer.

The nacelle is typically placed up on a tower 160 of the wind energy system and is mounted on a yaw bearing 140. The yaw bearing 140 may include a gearwheel. The yaw bearing 140 is schematically depicted by a gearwheel in Fig. 1. The electronic controller 130, using the information about wind direction and wind speed, controls an electrical yaw motor 142 for adjusting the yaw of the nacelle 110. The yaw motor may turn the nacelle such that the nacelle faces the wind. The electrical yaw motor 142 may include a gearwheel for engaging and turning a gearwheel of the yaw bearing 140.

Embodiments described herein may be generally used in any kind of energy system with a horizontal axis wind turbine. These energy systems typically are upwind machines. The energy systems may include rotors with any number of rotor blades such as one, two, three or more blades. The energy systems may include variable-speed wind turbines or, alternatively, constant-speed wind turbines. Gearboxes may include mechanical or hydraulic speed transmission systems.

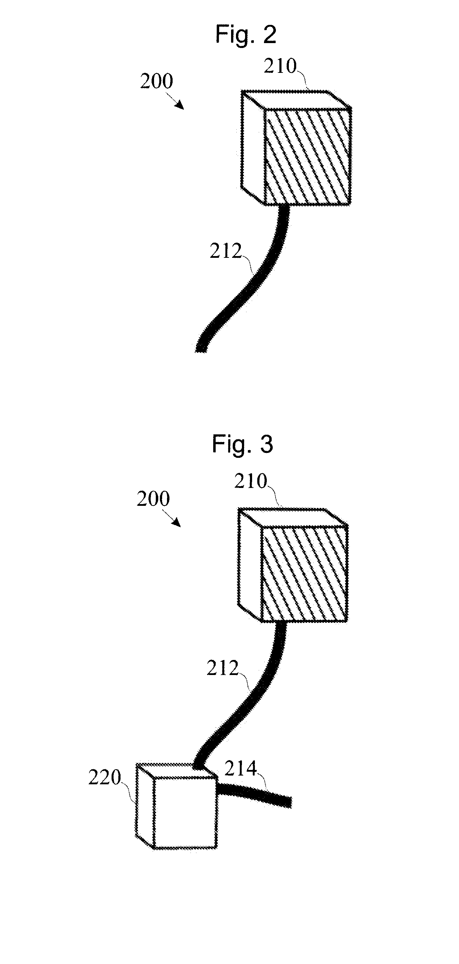

A hydraulic pressure system is provided according to one embodiment. Figs. 2 and 3 schematically illustrate a hydraulic pressure system 200. The hydraulic pressure system 200 includes a connection portion 210 for connecting the hydraulic pressure system 200 to the main drive train of the wind energy system. Typically, the connection portion is adapted to be connected to the main drive train or any one of its components, e.g., to a gearbox. The hydraulic pressure system is adapted to be driven by the kinetic energy of the main drive train in some embodiments.

The hydraulic pressure system generally is a system for providing fluid pressure to actuate at least one hydraulic yaw motor of the wind energy system, e.g., one, two, three, four, six, eight, or more hydraulic yaw motors, according to embodiments described herein. The fluid pressure to actuate the at least one hydraulic yaw motor may, e.g., be in the range from 70 bar to 1400 bar, typically from 100 bar to 500 bar such as 350 bar, and all subranges therebetween. The at least one hydraulic yaw motor adjusts the yaw of a nacelle of a wind energy system when actuated by the fluid pressure. Therein, the yaw of the nacelle is adjusted independently of electrical power, or, independently of the availability of electrical power. The hydraulic pressure system may be an emergency hydraulic pressure system. The hydraulic pressure system is activated in case of an emergency in some embodiments. An emergency may, e.g., be grid loss or internal failure of electrical or electronic components e.g., such as the electronic controller. The hydraulic pressure system is typically operable without electrical power.

The hydraulic pressure system, according to embodiments described herein, can provide fluid pressure even in emergency situations, e.g., in situations where no electrical power is available. The fluid pressure is provided by kinetic energy such as rotational energy of the main drive train. Such kinetic energy is available as long as the wind drives the main drive train. Simultaneously, the same wind exerts shear forces on the rotor blades in case of yaw loss. Yaw loss means that the nacelle does not face the wind or that the rotor is not at right angles to the wind. The fluid pressure can be used to operate at least one hydraulic yaw motor that can adjust the yaw and avoid shear forces. The hydraulic pressure system may therefore act towards reducing fatigue loads on the rotor blades, even in case of emergency.

The connection portion 210 includes a hydraulic pump for providing fluid pressure according to some embodiments. The hydraulic pump may be a high volume/low pressure pump, typically connected to the high speed shaft. Alternatively, the hydraulic pump may be a high pressure/low volume pump, e.g., in a hydrostatic pressure system. A high pressure/low volume pump is typically connected to the low speed shaft. The hydraulic pump or the connection portion may alternatively be connected to any part of the main drive train, e.g., an intermediate gear shaft in the gearbox, or the generator. The hydraulic pump may be adapted to be driven by the main drive train, more particularly by the kinetic energy of the main drive train. The hydraulic pump may work without electrical power. In some embodiments, the hydraulic pressure system 200 or the connection portion 210 is connectable to the main drive train via the hydraulic pump. The hydraulic pressure system may include a hydraulic fluid reservoir, e.g., an oil tank, for providing a hydraulic fluid.

In other embodiments, the connection portion 210 includes a tapping connector for connecting to a hydraulic system of the main drive train. In particular, the hydraulic system of the main drive train may be a hydraulic speed transmission. In case the main drive train includes a hydraulic system, a hydraulic pump of the hydraulic pressure system may be absent. However, in some embodiments, the connection portion 210 may include both a tapping connector and a hydraulic pump.

The hydraulic pressure system 200 may further include a hydraulic pipe system 212 for transmitting the fluid pressure as shown in Figs. 2 and 3. The hydraulic pipe system may include one or more pipes. For instance, the hydraulic pipe system 212 may include a first pipe for transmitting the hydraulic fluid from the connection portion 210 under pressure, e.g., from the hydraulic pump. In some embodiments, the hydraulic fluid is drawn from the hydraulic fluid reservoir by the hydraulic pump. The hydraulic pipe system may also include a second pipe for transmitting a hydraulic fluid to the connection portion 210, or back to the hydraulic fluid reservoir. Generally, the hydraulic pressure system may be an open-loop hydraulic circuit or a closed-loop hydraulic circuit. An open-loop hydraulic circuit is easier in its construction, while a closed-loop hydraulic circuit is more effective in that only leakage from the closed hydraulic loop may require replenishment. The hydraulic pipe system may be adapted to connect to a hydraulic yaw motor or to a non-electrical control system.

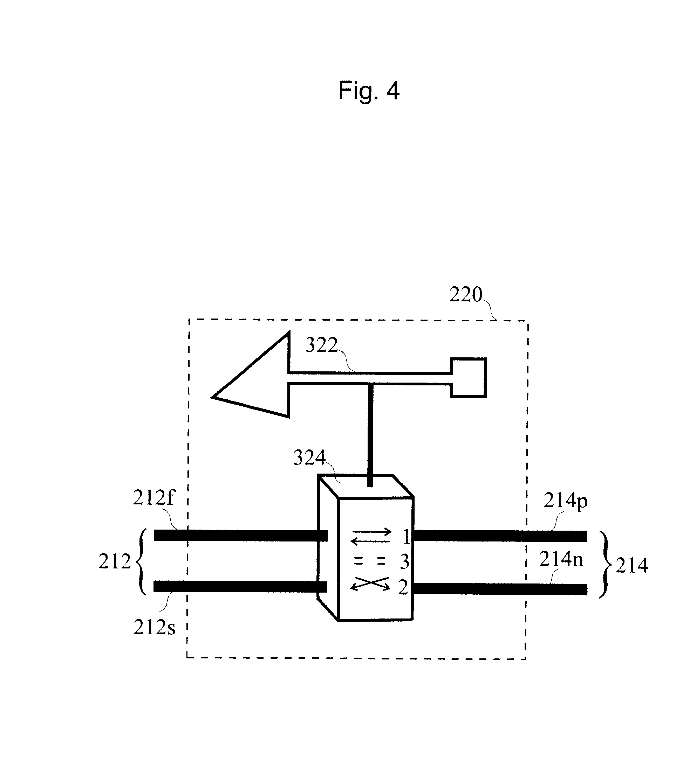

In some embodiments, the hydraulic pressure system 200 includes a non-electrical control system 220 as shown in Fig. 3. The non-electrical control system 220 may, e.g., include mechanical and/or hydraulic parts. The non-electrical control system is schematically shown as a box in Fig. 3. Particular embodiments of a non-electrical control system are described with respect to Fig. 4 below. The non-electrical control system may control operation of the at least one hydraulic yaw motor of the wind energy system. In particular, the non-electrical control system may control the operational direction of the at least one hydraulic yaw motor by controlling a flux of the hydraulic fluid. In Fig. 3, according to some embodiments, the hydraulic pipe system 212 is connected to the non-electrical control system 220, and the hydraulic pressure system includes a second hydraulic pipe system 214 for transmitting fluid pressure. The second hydraulic pipe system 214 may be adapted to be connected to the at least one hydraulic yaw motor.

A non-electrical control system is provided according to further embodiments. The non-electrical control system may be adapted to control operation of the at least one hydraulic yaw motor of the wind energy system for adjusting the nacelle of the wind energy system independently of electrical power. In particular, the non-electrical control system may control the flux and/or the flux direction of the hydraulic fluid for controlling the operation and/or operation direction of the at least one hydraulic yaw motor of the wind energy system.

The non-electrical control system 220 includes, in some embodiments, a valve for controlling the flux of the hydraulic fluid as shown in Fig. 4. The valve typically is a three-position valve 324, also referred to as a three-way valve, and includes a first position 1, a second position 2, and a stop position 3. The first position 1 allows for a positive flux direction of the flux. In Fig. 4, the flux with positive flux direction flows down through the first pipe 212f and a positive pipe 214p of the second hydraulic pipe system 214, and up through a negative pipe 214n and the second pipe 212s. The second position 2 allows for a negative flux direction of the flux. In Fig. 4, the flux with a negative flux direction flows down through the first pipe 212f and the negative pipe 214n of the second hydraulic pipe system 214, and up through the positive pipe 214p and the second pipe 212s. The stop position 3 stops the flux. The positive pipe 214p and the negative pipe 214n of the second hydraulic pipe system 214 may be adapted to connect to the at least one hydraulic yaw motor of the wind energy system, in particular to respective terminals of the at least one hydraulic yaw motor.

The non-electrical control system 220 may include an actuator, e.g., a wind vane 322, according to some embodiments. The actuator may include a plate or sail or other means to convert wind force into mechanical force such as a rotational force. In the following, purely as an example, the actuator is referred to as a wind vane. The wind vane 322 may be adapted to actuate the three-position valve 324. In particular, the wind vane may be adapted to actuate the three-position valve independently of electrical power. The wind vane may be adapted to select one position out of the first, second and stop positions by means of wind force acting on the wind vane.

The force of the wind acting on the wind vane depends on the wind speed and on the angle between the direction of the wind and the direction in which the wind vane is pointing. The angle relation is a sine relation. If the direction of the wind and the wind vane are substantially aligned, the force on the wind vane is small or even null. The three-position valve 324 may include a resistance portion for providing a resistance against opening the valve, e.g., a mechanical resistance. Since the valve controls the flux of the hydraulic fluid to the at least one hydraulic yaw motor, the flux will be stopped if forces on the wind vane become too small. The resistance portion be adapted to prevent over-yawing of the nacelle. In this way, the resistance portion can help to improve the yaw control. The wind vane, on the other hand, is dimensioned so as to provide forces that are large enough to overcome frictional forces and/or the resisting force of the resisting portion.

The non-electrical control system, according to embodiments described herein, may be a non-electrical emergency control system. In particular, the non-electrical control system may be operable without electrical power. Further, if the non-electrical control system includes a wind vane to actuate a hydraulic valve, the non-electrical control system will be more precise the stronger the wind is. Since shear forces and fatigue loads on the rotor blades become greater the stronger the wind is, but less so the more precisely the yaw is adjusted, the non-electrical control system described herein may meet safety requirements for the operation of wind energy systems. The non-electrical control system may, e.g., allow adjustment of the yaw angle to within 20° or even 10° or even 5° of the desired angle.

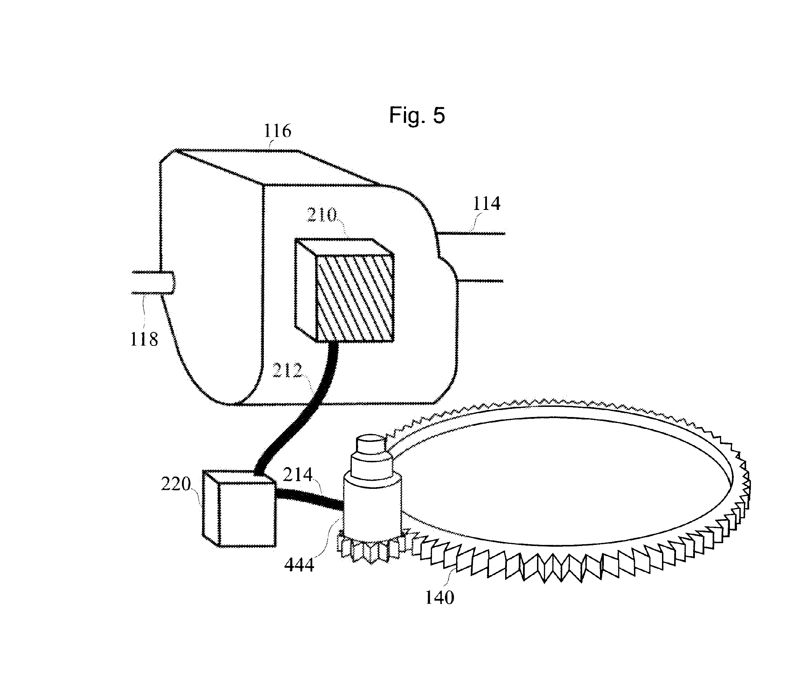

A hydraulic yaw adjustment system for adjusting the yaw of the nacelle of the wind energy system independently of electrical power is provided according to further embodiments. The hydraulic yaw adjustment system may be a hydraulic emergency yaw adjustment system. The hydraulic yaw adjustment system includes at least one hydraulic yaw motor for adjusting the yaw of the nacelle. In some embodiments, as shown in Fig. 5, the hydraulic yaw adjustment system includes a hydraulic yaw motor 444. The hydraulic yaw adjustment system may include a yaw bearing 140. The yaw bearing 140 may include a gearwheel and is symbolically illustrated by a gearwheel in Fig. 5. The hydraulic yaw motor 444 may include at least one of the following: a motor gearwheel for engaging the gearwheel of the yaw bearing, and a hydraulic yaw motor brake for slowing down the hydraulic yaw motor.

The hydraulic yaw adjustment system may include a hydraulic pressure system as described herein, e.g., a hydraulic pressure system described with respect to Figs. 2 and 3. Fig. 5 illustrates a hydraulic yaw adjustment system including the connection portion 210, the hydraulic pipe system 212, the non-electrical control system 220, and the second hydraulic pipe system 214. The hydraulic pipe systems 212, 214 and the non-electrical control system may be identical with, or similar to, the embodiments described with respect to Fig. 4. In this case, the hydraulic yaw motor 444 may include terminals for the positive pipe 214p, and/or the negative pipe 214n. If the flux of the hydraulic fluid flows in a positive direction through the positive pipe 214p and back through the negative pipe 214n, the hydraulic yaw motor 444 will turn in a positive rotation. If the flux of the hydraulic fluid flows in a negative direction through the negative pipe 214n and back through the positive pipe 214p, the hydraulic yaw motor 444 will turn in a negative rotation. The yaw bearing may accordingly be turned by the positive or negative rotation of the hydraulic yaw motor 444 and adjust the yaw of the nacelle. The hydraulic pressure system may provide fluid pressure to release or engage the hydraulic yaw motor brake. For example, there may be as many hydraulic yaw motor brakes as there are hydraulic yaw motors, e.g., one, two, three, four, six, eight or more hydraulic yaw motor brakes.

The hydraulic pressure system is generally connectable to the main drive train of the wind energy system. The hydraulic pressure system is adapted to be driven by the kinetic energy of the main drive train.

The hydraulic yaw adjustment system includes a yaw brake system in some embodiments. The yaw brake system may include at least one hydraulic yaw brake for decelerating and/or fastening the yaw bearing, e.g., one, two, three, four, six, eight or more hydraulic yaw brakes. The hydraulic pressure system may provide fluid pressure to release or engage the at least one hydraulic yaw brake.

The hydraulic pressure system may, e.g., include at least one branching pressure valve to provide fluid pressure to the at least one hydraulic yaw brake and/or the at least one hydraulic yaw motor brake. If the fluid pressure rises to actuate the at least one yaw motor, e.g., in the second pipe system 214, the at least one pressure valve may open above a pressure threshold. The fluid pressure may then actuate the at least one yaw motor and release the at least one hydraulic yaw brake and/or the at least one hydraulic yaw motor brake. The fluid pressure may be provided to the corresponding brakes by yet another hydraulic pipe system connected to the at least one branching pressure valve. If the fluid pressure falls below the threshold, e.g., because the non-electrical control system switches into the stop position, the at least one branching pressure valve may close. Thereby, the at least one hydraulic yaw brake and/or the at least one hydraulic yaw motor brake may return to engaging and decelerating the yaw bearing and/or the at least one hydraulic yaw motor.

A wind energy system is provided in further embodiments. The energy system includes a main drive train for transmitting wind power in the form of kinetic energy. As shown in Fig. 5, according to some embodiments, the main drive train includes the main shaft 114, the gearbox 116, and the generator shaft 118. The main drive train may include the generator and/or the hub. Generally, the wind energy system may include a different main drive train, e.g., a direct drive main drive train or a hybrid main drive train.

The wind energy system further includes a hydraulic yaw adjustment system for adjusting the yaw of the nacelle of the wind energy system independently of electrical power. The hydraulic yaw adjustment system may be a hydraulic yaw adjustment system according to embodiments described herein, e.g., as described with respect to Fig. 5. In particular, the hydraulic yaw adjustment system may include a hydraulic pressure system according to embodiments described herein, e.g., as described with respect to Figs. 2 and 3. The hydraulic pressure system may more particularly include a non-electrical control system according to embodiments described herein, e.g., as described with respect to Fig. 4.

The hydraulic pressure system is connected to the main drive train, e.g., to the gearbox, according to typical embodiments. An embodiment is illustrated in Fig. 5 wherein the connection portion 210 of the hydraulic pressure system 200 is connected to the gearbox 116. The hydraulic pressure system typically includes a tapping connector if the gearbox includes hydraulic speed transmission, the tapping connector tapping the fluid pressure from the hydraulic speed transmission. If the gearbox does not contain a hydraulic system, the hydraulic pressure system typically includes a hydraulic pump for providing fluid pressure. The hydraulic pump is driven by the kinetic energy of the main drive train in such embodiments, and the hydraulic pressure system is connected to the main drive train via the hydraulic pump.

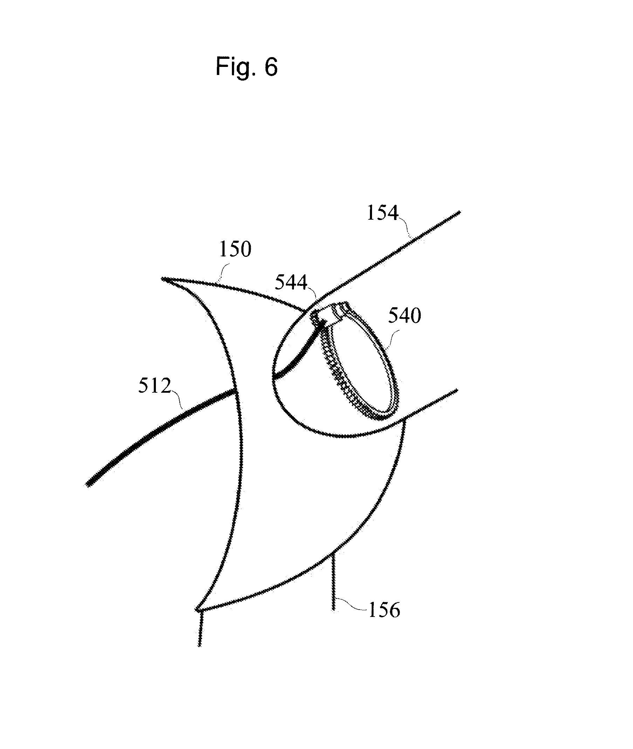

The wind energy system may include a hydraulic blade pitch adjustment system for controlling the kinetic energy of the main drive train independently of electrical power according to some embodiments. Fig. 6 shows the hub 150 and the rotor blades 154 and 156 of the wind energy system. According to some embodiments, as shown in Fig. 6, the hydraulic blade pitch adjustment system includes at least one hydraulic pitch motor 544 for adjusting the pitch angle of the blades, exemplarily shown for rotor blade 154 in Fig. 6. The pitch angle may, e.g., be varied to within 25° of the angle of idling, the angle of idling being defined by the position of the blades providing the smallest area of attack to the wind. The at least one hydraulic pitch motor 544 may be connected via a third hydraulic pipe system 512 to a hydraulic pressure system, e.g., a hydraulic pressure system according to embodiments described herein. The at least one pitch motor 544 may drive at least one pitch bearing 540, symbolically shown as a gearwheel in Fig. 6.

The hydraulic blade pitch adjustment system may be operated and/or controlled without electrical power. The fluid pressure in the hydraulic pressure system driven by the main drive train is a measure for the rotational speeds of the shaft to which the hydraulic pressure system is coupled. Hence, the fluid pressure may be used as a quantity to control the rotational speeds by adjusting the pitch of the blades accordingly. For instance, a high pressure can be taken as a signal to rotate the blades away from the wind direction (or in the direction of the stall position), whereas a small pressure can be taken as a signal to move the blades to align with the wind direction.

The wind energy system according to embodiments described herein may be a wind energy system with a hydraulic emergency yaw adjustment system and/or an emergency hydraulic blade pitch adjustment system. Since the emergency systems may be operable even without electrical power, the wind energy system may avoid fatigue loads by wind shear forces on the blades even in the case of power failure. The hydraulic pressure system and/or the non-electrical control system and/or the hydraulic yaw adjustment system and/or the hydraulic blade pitch adjustment system, according to embodiments described herein, are systems operable independently of external energy supply other than wind energy. The yaw of the nacelle and/or the pitch of the rotor blades may accordingly be controlled even in emergency situations where no energy source, other than wind energy, is present.

By avoiding fatigue loads on the rotor blades, the lifetime of the blades may be prolonged, the need for maintenance and downtimes of the wind energy system be less frequent, and operating costs reduced, whilst security of the wind energy system may be enhanced at the same time. The wind energy system may more easily comply with load cases, e.g., "70° wind shear and 50 m/s gust". The emergency systems may be activated in the following way: The electrical or electronic components, e.g., the electronic controller, that are controlling the operation of the turbine in normal mode, are built in a failsafe way. That is, in the operational state that they assume when there is no voltage the hydraulic emergency systems are active by default. The electrical or electronic components may deactivate the hydraulic emergency systems in normal mode, when power and voltage are available.

In further embodiments, the hydraulic yaw adjustment system and/or the hydraulic blade pitch adjustment system may be supplementary systems that operate in addition to, and optionally simultaneously with, regular systems such as the electronic yaw adjustment system described with respect to Fig. 1. The hydraulic yaw adjustment system may coarsely adjust the yaw of the nacelle, while the electronic yaw adjustment system may fine-tune the yaw of the nacelle.The hydraulic yaw adjustment system may replace conventional systems such as electronic yaw adjustment systems altogether in other embodiments. Productivity of the wind energy system may be enhanced in such embodiments by means of the hydraulic yaw adjustment, which may constantly tune the yaw of the nacelle.

A method of adjusting the yaw of the nacelle of the wind energy system independently of electrical power is provided according to yet further embodiments. The method includes generating kinetic energy of a main drive train from wind energy. The method further includes generating fluid pressure from the kinetic energy of the main drive train for actuating the at least one hydraulic yaw motor for adjusting the yaw of the nacelle. The fluid pressure may be directly generated from the kinetic energy of the main drive train. The kinetic energy is then not first converted into other forms of energy such as electrical energy. The fluid pressure can be generated by the hydraulic pressure system. Therein, the hydraulic pressure system is typically connected to the main drive train of the wind energy system and is driven by the kinetic energy of the main drive train. The method includes generating fluid pressure by a hydraulic pressure system that is operable independently of external energy supply other than wind energy, according to some of the embodiments.

The method may further include determining the availability of electrical power and activating the hydraulic pressure system if non-availability of electrical power is determined. The optional determination of the availability of electrical power and activation of the hydraulic pressure system are typically taking place prior to providing fluid pressure, and are more common if the fluid pressure system is used as part of an emergency system rather than as part of a supplementary or stand-alone system.

The method may further include at least one of the following: releasing or engaging, by means of the fluid pressure, at least one of: a hydraulic yaw brake and at least one hydraulic yaw motor brake of the at least one hydraulic yaw motor; hydraulically adjusting the pitch angle of the rotor blades of the wind energy system, typically for controlling the kinetic energy of the main drive train; controlling operation of the at least one hydraulic yaw motor, typically by controlling the availability of the fluid pressure to the at least one hydraulic motor; actuating the at least one hydraulic motor by the fluid pressure; adjusting the yaw of the nacelle. Actuating the at least one hydraulic motor and adjusting the yaw may depend on the availability of the fluid pressure to the at least one hydraulic motor.

Further, controlling operation of the at least one hydraulic yaw motor may further include: controlling the flux of the hydraulic fluid by means of a valve, typically a hydraulic valve, more typically a three-position valve. The three-position valve may include a first, second and stop position, the first position allowing for a positive flux direction of the flux, the second position allowing for a negative flux direction of the flux, and the stop position allowing for stopping the flux. The method may further include selecting, by means of wind force acting on an actuator such as a wind vane, one of the first, second, and stop positions.

According to further embodiments, use is provided of at least one of: a hydraulic pressure system, a non-electrical control system, and a hydraulic yaw adjustment system, according to embodiments described herein, for adjusting the yaw of the nacelle of the wind energy system. According to further embodiments, use of a hydraulic blade pitch adjustment system, according to embodiments described herein, for controlling the kinetic energy of the main drive train is provided.

Exemplary embodiments of systems and methods for adjusting the yaw of a nacelle of a wind energy system independently of electrical power are described above in detail. The systems and methods are not limited to the specific embodiments described herein, but rather, components of the systems and/or steps of the methods may be utilized independently and separately from other components and/or steps described herein. For example, the hydraulic pressure systems and hydraulic yaw adjustment systems are not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A hydraulic pressure system for providing fluid pressure to actuate at least one hydraulic yaw motor for adjusting the yaw of a nacelle of a wind energy system independently of electrical power, the hydraulic pressure system comprising:
   a connection portion connectable to a main drive train of said wind energy system, said main drive train transmitting kinetic energy generated by wind energy, and
   wherein said hydraulic pressure system is adapted to be driven by the kinetic energy of said main drive train via the connection portion to provide the fluid pressure.
2. The hydraulic pressure system according to clause 1, wherein the connection portion includes:
   a hydraulic pump for providing the fluid pressure,
   wherein said hydraulic pressure system is connectable to said main drive train via said hydraulic pump, said hydraulic pump being adapted to be driven by the kinetic energy of said main drive train.
3. The hydraulic pressure system according to any preceding clause, comprising:
   a non-electrical control system for controlling operation of said at least one hydraulic yaw motor independently of electrical power.
4. The hydraulic pressure system according to any preceding clause, wherein said non-electrical control system includes:
   a hydraulic valve for controlling a flux of a hydraulic fluid, said hydraulic valve being connected to an actuator for actuating said valve by wind force acting on said actuator.
5. The hydraulic pressure system according to any preceding clause, wherein said hydraulic valve includes:
   a three-position valve for controlling the flux of the hydraulic fluid, said three-position valve including:
      a first position allowing for a positive flux direction of the flux,
      a second position allowing for a negative flux direction of the flux, and
      a stop position for stopping the flux, and
      wherein said actuator is adapted to actuate said three-position valve and to select one of said first, second, and third positions by means of wind force acting on said actuator.
6. A wind energy system, comprising:
   a main drive train for transmitting wind power in the form of kinetic energy; and
   a hydraulic yaw adjustment system for adjusting the yaw of a nacelle of said wind energy system independently of electrical power, said hydraulic yaw adjustment system including:
      at least one hydraulic yaw motor for adjusting the yaw of said nacelle, and a hydraulic pressure system providing fluid pressure to actuate said at least one hydraulic yaw motor,
      wherein said hydraulic pressure system is connected to said main drive train, said main drive train transmitting kinetic energy generated by wind energy, and wherein said hydraulic pressure system is driven by the kinetic energy of said main drive train.
7. The wind energy system according to any preceding clause, wherein said main drive train includes:
   a hydraulic speed transmission,
   wherein said hydraulic pressure system is connected to said hydraulic speed transmission, said hydraulic speed transmission providing fluid pressure to said hydraulic pressure system.
8. The wind energy system according to any preceding clause, wherein said hydraulic pressure system includes:
   a hydraulic pump for providing fluid pressure,
   wherein said hydraulic pressure system is connected to said main drive train via said hydraulic pump, said hydraulic pump being driven by the kinetic energy of said main drive train.
9. The wind energy system according to any preceding clause, wherein said hydraulic pressure system includes:
   a non-electrical control system for controlling operation of said at least one hydraulic yaw motor.
10. The wind energy system according to any preceding clause, wherein said non-electrical control system includes:
   a three-position valve for controlling a flux of a hydraulic fluid, said three-position valve including:
      a first position allowing for a positive flux direction of the flux,
      a second position allowing for a negative flux direction of the flux, and
      a stop position for stopping the flux,
      said non-electrical control system further including:
   an actuator for actuating said three-position valve, wherein said actuator is adapted to select one of said first, second and stop position by means of wind force acting on said actuator.
11. The wind energy system according to any preceding clause, further comprising:
   a hydraulic blade pitch adjustment system for controlling the kinetic energy of said main drive train independently of electrical power.
12. The wind energy system according to any preceding clause, wherein said hydraulic yaw adjustment system further includes:
   a hydraulic yaw brake system, and
   said at least one hydraulic yaw motor includes
   a hydraulic yaw motor brake, and
   wherein said hydraulic pressure system provides fluid pressure to release or engage at least one of said hydraulic yaw brake and said hydraulic yaw motor brake.
13. A method of adjusting the yaw of a nacelle of a wind energy system independently of electrical power, said method comprising:
   generating kinetic energy of a main drive train from wind energy;
   generating fluid pressure from the kinetic energy of said main drive train in order to actuate at least one hydraulic yaw motor for adjusting the yaw of said nacelle.
14. The method according to any preceding clause, further comprising:
   controlling operation of said at least one hydraulic yaw motor by controlling the availability of the fluid pressure to said at least one hydraulic yaw motor.
15. The method according to any preceding clause, further comprising:
   actuating said at least one hydraulic motor by said fluid pressure and adjusting the yaw of said nacelle by said at least one hydraulic yaw motor if the fluid pressure is available to said at least one hydraulic motor.
16. The method according to any preceding clause, wherein controlling operation of said at least one hydraulic yaw motor by controlling the availability of the fluid pressure to said at least one hydraulic yaw motor includes:
   controlling a flux of a hydraulic fluid by means of a three-position valve including:
      a first position allowing for a positive flux direction of the flux,
      a second position allowing for a negative flux direction of the flux, and
      a stop position for stopping the flux,
   selecting, by means of wind force acting on an actuator, one of said first, second, and stop positions.
17. The method according to any preceding clause, further comprising:
   hydraulically adjusting a pitch angle of rotor blades of said wind energy system for controlling the kinetic energy of said main drive train.
18. The method according to any preceding clause, further comprising:
   releasing or engaging, by means of the fluid pressure, at least one of:
   a hydraulic yaw motor brake of said at least one hydraulic yaw motor and a hydraulic yaw brake.
19. The method according to any preceding clause, further comprising:
   determining the availability of electrical power; and
   activating said hydraulic pressure system if non-availability of electrical power is determined.

## Claims

1. A hydraulic pressure system (200) for providing fluid pressure to actuate at least one hydraulic yaw motor (444) for adjusting the yaw of a nacelle (110) of a wind energy system (100) independently of electrical power, the hydraulic pressure system comprising:
a connection portion (210) connectable to a main drive train of the wind energy system, the main drive train transmitting kinetic energy generated by wind energy, and
wherein the hydraulic pressure system is adapted to be driven by the kinetic energy of the main drive train via the connection portion to provide the fluid pressure.

2. The hydraulic pressure system according to claim 1, wherein the connection portion (210) includes:
a hydraulic pump for providing the fluid pressure,
wherein the hydraulic pressure system is connectable to the main drive train via the hydraulic pump, the hydraulic pump being adapted to be driven by the kinetic energy of the main drive train.

3. The hydraulic pressure system according to any of the preceding claims, comprising:
a non-electrical control system (220) for controlling operation of the at least one hydraulic yaw motor independently of electrical power.

4. The hydraulic pressure system according to any preceding claim, wherein the non-electrical control system comprises:
a hydraulic valve for controlling the flux of a hydraulic fluid, the hydraulic valve being connected to an actuator (322) for actuating the valve by wind force acting on the actuator.

5. The hydraulic pressure system according to any preceding claim, wherein the hydraulic valve comprises:
a three-position valve (324) for controlling the flux of the hydraulic fluid, the three-position valve including:
a first position (1) allowing for a positive flux direction of the flux,
a second position (2) allowing for a negative flux direction of the flux, and
a stop position (3) for stopping the flux, and
wherein the actuator is adapted to actuate the three-position valve and to select one of the first, second, and third positions by means of wind force acting on the actuator.

6. A wind energy system (100), comprising:
a main drive train for transmitting wind power in the form of kinetic energy; and
a hydraulic yaw adjustment system for adjusting the yaw of a nacelle of the wind energy system independently of electrical power, the hydraulic yaw adjustment system including:
at least one hydraulic yaw motor for adjusting the yaw of the nacelle, and
the hydraulic pressure system (200) according to any of the claims 1 to 5, wherein the hydraulic pressure system is connected to the main drive train of the wind energy system.

7. A method of adjusting the yaw of a nacelle of a wind energy system (100) independently of electrical power, the method comprising:
generating kinetic energy of a main drive train from wind energy;
generating fluid pressure from the kinetic energy of the main drive train for actuating at least one hydraulic yaw motor for adjusting the yaw of the nacelle.

8. The method according to claim 7, further comprising:
controlling operation of the at least one hydraulic yaw motor by controlling the availability of the fluid pressure to the at least one hydraulic yaw motor; and
actuating the at least one hydraulic motor by the fluid pressure and adjusting the yaw of the nacelle by the at least one hydraulic yaw motor if the fluid pressure is available to the at least one hydraulic motor.

9. The method according to claim 7 or claim 8, wherein controlling operation of the at least one hydraulic yaw motor by controlling the availability of the fluid pressure to the at least one hydraulic yaw motor includes:
controlling a flux of a hydraulic fluid by means of a three-position valve including:
a first position allowing for a positive flux direction of the flux,
a second position allowing for a negative flux direction of the flux, and
a stop position for stopping the flux,
selecting, by means of wind force acting on an actuator, one of the first, second, and stop positions.

10. The method according to any of the claims 7 to 9, further comprising:
hydraulically adjusting a pitch angle of rotor blades of the wind energy system (100) for controlling the kinetic energy of the main drive train.
